# EUROPÄISCHE PATENTSCHRIFT

(11) **EP 3 237 765 B1**
(45) Veröffentlichungstag und Bekanntmachung des Hinweises auf die Patenterteilung: **25.05.2022**
(21) Anmeldenummer: 15823129.0
(22) Anmeldetag: 08.12.2015
(51) Int. Cl.: F16B 11/00

(54) **VERBINDUNG ZWISCHEN ZWEI FÜGEPARTNERN SOWIE VERFAHREN ZUR HERSTELLUNG DER VERBINDUNG**
CONNECTION BETWEEN TWO JOINING PARTNERS, AND METHOD FOR ESTABLISHING SAID CONNECTION
LIAISON ENTRE PARTENAIRES DE JONCTION ET PROCÉDÉ DE RÉALISATION DE LA LIAISON

(30) Priorität: 12.12.2014 DE 102014118489
(43) Veröffentlichungstag der Anmeldung: 01.11.2017
(73) Patentinhaber: Karlsruher Institut für Technologie, 76131 Karlsruhe (DE)
(72) Erfinder: UMMENHOFER, Thomas, 76131 Karlsruhe (DE); ALBIEZ, Matthias, 76227 Karlsruhe (DE)
(86) Internationale Anmeldenummer: PCT/EP2015/002469
(87) Internationale Veröffentlichungsnummer: WO 2016/091377

(56) Entgegenhaltungen:
- DE-A1- 19 958 375
- DE-A1-102012 001 943
- US-A- 4 752 151

## Beschreibung

Die Erfindung betrifft eine Verbindung zwischen zwei Fügepartnern, vorzugsweise zwei Bauteile, weiter bevorzugt zwei metallische Bauteile mit vorzugsweiser glatter Oberfläche sowie Verfahren zur Herstellung der Verbindung gemäß der Ansprüche 1 bzw. 8.

Die eingangs genannte Verbindung ist eine hybride Klebverbindung, die auf dem Gebiet der Verbindungstechnik eingesetzt wird, und zwar insbesondere in der Verbindung von Konstruktionsbauteilen, vorzugsweise von Hohlprofilen aus Stahl-, Metall- oder Kunststoff mit Anwendungen beispielsweise im Hochbau, Infrastrukturbau, Brückenbau, Kranbau, Turmbau und Windenergieanlagenbau.

Klassische Verbindungen zwischen Konstruktionsbauteilen werden üblicherweise durch Schweißen, Schrauben oder Nieten realisiert. In jüngster Zeit stehen für diesen Zweck jedoch immer mehr auch Klebeverbindungen, wie sie aus dem Fahrzeugbau oder in der Luft- und Raumfahrttechnik allgemein bekannt sind, im Fokus von anwendungsorientierten Forschungsvorhaben auch im Bereich des Bauingenieurwesens. Im Gegensatz zu den strukturellen Klebverbindungen im Automobilbau, die mit dünnen Klebschichten und oftmals unter sauberen laborähnlichen Umgebungsbedingungen realisiert werden, kann im Bauwesen aufgrund der unvermeidlichen erheblichen Fertigungs- und Maßtoleranzen der Fügeteilpartner meist keine Dünnschichtklebung ausgeführt werden. Die im Bauwesen zu überbrückenden realen Spaltmaße liegen oftmals in der Größenordnung von 3 bis 15 mm und sogar darüber. Dies führt zu abnehmenden Beanspruchbarkeiten im Vergleich zu Dünnschichtklebungen sowie zu großen erforderlichen Klebstoffmengen, die bei Einsatz der üblichen Qualitätsklebstoffe zu enormen Kosten führen. Zudem muss die Klebverbindung aufgrund der Strukturgrößen vor Ort unter teilweise widrigen Baustellenbedingungen ausgeführt werden. Dies erhöht die Fehleranfälligkeit bei der Klebverbindung.

Allgemein ist bekannt, Beton mit Strukturen aus Metall oder Kunststoff zu armieren oder metallische Elemente ganz oder teilweise in Beton einzugießen und damit formschlüssig zu fixieren. Beispielsweise werden im Stahlbetonbau bereits seit Jahrzehnten Stäbe oder -matten aus Stahl vor Ort in den Beton eingelegt und durch den aushärtenden Beton formschlüssig verbunden. Ebenso ist es allgemein üblich, metallische Elemente wie z. B. Masten, Pfähle, Widerlager, Poller oder andere Haltemittel ebenso vor Ort in Beton formschlüssig einzugießen und so ortsfest im Fundament oder an Kunstbauten zu fixieren. Die metallischen Elemente sind dabei in einer Matrix aus Beton oder Mörtel eingebunden. Eine Übertragbarkeit dieser bekannten Technologien auf eine Klebverbindung, d. h. eine Verbindung zwischen zwei sich gegenüberstehenden Fügeflächen zweier Fügepartner ist nicht ohne weiteres möglich.

Eine Verbindungstechnik im Bauwesen sieht jedoch vor, Klebspalte zwischen zwei ineinander geschobener Konstruktionsbauteilen vorzugsweise aus Metall anstelle mit einem organischen Klebstoff mit einem mineralischen Bindemittel wie z. B. Mörtel zu vergießen. Dabei kommt es zu einer formschlüssigen Verbindüng des Mörtels zu den Fügeflächen, die in der Fachwelt als sog. *Grouted Joint* geläufig ist.

In **[1]** wird beispielhaft eine solche *Grouted Joint* Verbindung zwischen zwei ineinandergeschobenen überlappenden Rohren in der offshore Öl- und Gasindustrie offenbart, bei dem der Fügespalt, der sich durch den Überlappungsbereich ergibt, mit einem Mörtel gefüllt ist. Die Fügeflächen sind entsprechend den Rohrdurchmessern umlaufend gestaltet. Eine Relativbewegung dieser zueinander ist damit im Rahmen der beschriebenen Verbindung praktisch nur als Scherbewegung in radialer oder axialer Rohrausrichtung möglich. Um diese zu behindern, sind die Fügeflächen mit hervorstehenden aufgeschweißten Schubrippen versehen, die zwischen versetzt gegenüberliegenden Schubrippen die Ausbildung von Druckstreben im Mörtel bewirken. Dies erhöht insbesondere die Tragfähigkeit der Verbindung in Rohrlängsrichtung signifikant. Das Verbindungskonzept bleibt dabei jedoch nicht nur formschlüssig, sondern ruft ausgeprägte Beanspruchungsinhomogenitäten im Mörtel hervor, was insbesondere bei wechselnder Belastung zu Materialermüdung führt. Insofern lag ein Schwerpunkt von Untersuchungen in der Verbesserung der Trag- und Ermüdungsfestigkeit durch Verwendung unterschiedlicher Füllmaterialien.

[2] offenbart eine ähnliche Ausgestaltung für eine Gründung für Bauwerke, wobei ein Innen- und ein Außenrohr unter Bildung eines im Wesentlichen umlaufenden Zwischenraums ineinander geschoben sind, wobei der Zwischenraum zumindest teilweise mit einer betonartigen Masse gefüllt ist und die Fügeflächen zur Erhöhung der möglichen Schubübertragung mit ringförmigen Materialanhäufungen versehen sind.

Aus [3] ist eine Verbindung sowie ein Verfahren zur Herstellung dieser Verbindung zwischen mindestens zwei Fügepartnern bekannt, mit einem dazwischenliegenden Fügespalt mit gegenüberliegenden Fügeflächen. Eine der Fügeflächen wird bei der Herstellung nach dem Fügen mit einer Klebschicht mit eingebunden Feststoffpartikeln benetzt und verbleibenden Fügespalt mit einem gefüllten Klebstoff gefüllt.

Aus [4] ist zudem eine Verbindung zwischen mindestens zwei Fügepartnern bekannt, mit einem dazwischenliegenden Fügespalt mit gegenüberliegenden Fügeflächen, wobei eine der Fügeflächen ebenfalls mit einer Klebeschicht mit eingebundenen Feststoffpartikeln benetzt ist.

Ferner wird in **[5]** eine Vorrichtung zur Krafteinleitung mit einer Verbindung von zwei Elementen aus Werkstoffen, die sich nur unzureichend reibschlüssig verbinden lassen offenbart. Hierzu wird ein weiteres Element zwischen den Elementen eingesetzt, mit einer Klebverbindung zu einem der vorgenannten Elemente sowie einem Andruckmittel zum anderen der vorgenannten Elemente.

Davon ausgehend liegt eine **Aufgabe der Erfindung** darin, eine mechanische Verbindung zwischen mindestens zwei Fügepartnern, vorzugsweise zwei Bauteilen, weiter bevorzugt zwei konzentrisch ineinander geschobenen metallischen Rohren mit einer erhöhten statischen und falls erforderlich zyklischen Beanspruchbarkeit zu schaffen.

Eine weitere Aufgabe der Erfindung liegt darin, die Ausführung der Verbindung so zu ermöglichen, dass sie bei gegebenen Produktions- und Montagerandbedingungen vor Ort prozesssicher und damit leicht und fehlerfrei realisierbar ist.

Folglich liegt eine weitere Aufgabe der Erfindung auch darin, ein Verfahren zur Herstellung der Verbindung vorzuschlagen.

Die Aufgabe wird mit einer Verbindung und einem Verfahren mit den Merkmalen von Anspruch 1 bzw. 8 gelöst. Die rückbezogenen Unteransprüche geben vorteilhafte Ausgestaltungen der Verbindung und des Verfahrens wieder.

Die Lösung der Aufgaben basiert auf einer Verbindung zwischen zwei Fügepartnern mit einem dazwischen liegenden Fügespalt mit gegenüberliegenden Fügeflächen. Vorzugsweise sind dabei zwei Fügepartner mit zwei Fügeflächen beteiligt. Die Fügepartner sind vorzugsweise Rohrelemente (Rundrohre, Rechteckhohlprofile, Quadrathohlprofile, Vollquerschnitte etc.). Die beiden Fügepartner werden vorzugsweise durch einen Stecker vorzugsweise mit einer rotationssymmetischen Außenfläche und durch eine Muffe, vorzugsweise mit einer umlaufenden, vorzugsweise rotationsymmetrischen Innenfläche gebildet. Stecker und Muffe wiederum werden weiter bevorzugt durch zwei ineinander angeordnete und vorzugsweise auch koaxial zueinander angeordnete Rohrelemente mit unterschiedlichen Durchmessern gebildet.

Komplexere Strukturen mit mehr als zwei Fügepartnern und/oder Fügeflächen liegen auch im Rahmen der Lösung und sind Teil der Erfindung wie auch eine Einbindung oder Verbindung von Metall- oder Kunststoffprofilen wie z. B. L-, T- oder Doppel-T-Profile in entsprechend geformte Gegenstücke als Fügepartner (z. B. bei Brücken, Gitterstrukturen o. Ä.). Der Fügespalt weist bei diesen Fügepartnern vorzugsweise keine konstante Spaltbreite auf.

Eine optionale Ausgestaltung sieht einen Fügespalt vor, der über die Erstreckung der Fügeflächen unterschiedliche Fügespaltbreiten aufweist. Die Fügeflächen sind dann bevorzugt nicht über deren Erstreckung (des Überlappungsbereich) parallel zueinander angeordnet, sondern ändern lokal ihre Abstände. Dies kann sowohl in Längs- als auch in Umfangsrichtung des Fügeteils sein. Dies schließt z. B. optionale Unstetigkeitsstellen in mindestens einer der Fügeflächen ebenso wie eine mögliche konische Gestaltung des Fügespalts mit ein.

Ebenso lassen sich optional auch die Dicken mindestens einer Klebeschicht und/oder des Füllmaterial über die Erstreckung der Fügeflächen optional variieren, womit insbesondere die Verbindungfestigkeit zwischen Füllmaterial und Klebeschicht gegenüber Schwerbeanspruchung steigt.

Wesentlich ist, dass mindestens eine der Fügeflächen mit einer bevorzugt organischen Klebschicht mit ein- und/oder angebundenen Feststoffpartikeln benetzt ist und der verbleibende Fügespalt mit einem anorganischen oder organischen Füllmaterial, wobei das Füllmaterial ein Vergussmörtel oder ein anorganischer hydraulisch oder unhydraulisch abbindender Werkstoff ist.

Der als **Füllmaterial** vorzugsweise vorgeschlagene Vergussmörtel ist ein sehr kostengünstiger anorganischer Werkstoff, der im ausgehärteten Zustand eine hohe Steifigkeit und vergleichsweise große Druckbeanspruchbarkeit ausweist. Allerdings sind die realisierbaren Adhäsionskräfte zu angrenzenden Oberflächen im Vergleich zu organischen Klebstoffsystemen wie z. B. einem organischen Epoxidharz- oder Polyurethanklebstoff gering bis nicht vorhanden. Hier setzt die Erfindung an. Das infolge der bauüblich großen Dicke der Fügespalte (in der Größenordnung von 3 bis 15 mm und darüber) große Klebstoffvolumen wird hauptsächlich durch die Verwendung eines schwindarmen bzw. -freien Vergussmörtels bzw. Quellmörtels gefüllt. Die erforderliche Adhäsion zu den Fügeflächen hin wird durch die genannte organische Klebschicht mit ein- und/oder angebundenen Feststoffpartikeln als Zwischenschicht erreicht. Während der organische Klebstoff der Klebschicht eine gute Anbindung zu den bevorzugt metallischen Fügeflächen sicherstellt, gewähren die Feststoffpartikel eine gute Anbindung zum Füllstoff, wobei die beiden Anbindungen in vorteilhafter Weise sich nahezu gleichmäßig über die gesamten Fügeflächen erstrecken.

Die bevorzugt organische **Klebschicht** besteht vorzugsweise aus einem chemisch härtenden Klebstoff. Die Aushärtung erfolgt über eine chemische Reaktion der mindestens einen Komponente des Klebstoffs. Sie weisen im Gegensatz zu physikalisch härtenden Klebstoffen vorzugsweise keine Lösungsmittelbestandteile und/ oder ausgeprägte Erweichungstemperaturintervalle auf, die ein grundsätzlich unerwünschtes Fließverhalten der Klebeschicht an sich erhöhen würden.

Weiter bevorzugt besteht die Klebschicht aus einem **Epoxidharz- oder Polyurethan-Klebstoff,** bei denen nach einer Aushärtung einer Harz- und einer Härterkomponente ein Duroplast, d. h. ein stabiler Kunststoff ohne ein Erweichungstemperaturintervall entsteht.

Wesentlich für eine vollständige homogene Aushärtung des Epoxidharz- oder Polyurethan-Klebstoffes zu einem Kunststoff mit einem vorteilhaften minimalen Fließverhalten ist die Einstellung eines stöchiometrischen homogenen Mischungsverhältnisses von Harz- und Härterkomponenten vor der Reaktion. Dies erfolgt vorzugsweise durch maschinelle, d. h. nicht manuelle Mischungsvorgänge vorzugsweise größerer Mengen an Harz- und Härterkomponenten.

Üblicherweise härten Klebstoffe auf der Basis von Epoxidharze oder Polyurethane bei Umgebungstemperatur (maximal 35 °C) vollständig aus.

Im Rahmen einer alternativen Ausgestaltung werden Epoxidharze oder Polyurethane vorgeschlagen, bei denen die Aushärtung bei einer erhöhten Temperatur über 50 °C, vorzugsweise über 80 °C, weiter bevorzugt über 120 °C erfolgt. Gegenüber einer Aushärtung bei Raumtemperatur (20 °C) weist eine solche Klebeschicht vollständigere Reaktion, eine verbesserte Durchhärtung, damit eine erhöhte Festigkeit und ein weiter reduziertes Fließverhalten sowie eine bessere Anbindung an die Fügeflächen der Fügepartner auf. Ferner sinkt die Viskosität der Epoxidharzklebstoffe vor einer Reaktion bei erhöhter Temperatur, was bei einem Aufbringen der Klebschicht die Benetzung und Anbindung zu den angrenzenden Fügeflächen und damit eine stoff- und formschlüssige Anbindung verbessert.

Besonders vorteilhaft sind hierbei einkomponentige Epoxidharzklebstoffe, bei denen schon im Rahmen einer industriell betreibbaren Herstellung Harz- und Härterkomponente homogener und im stöchiometrischen Verhältnis miteinander vermischbar sind und die Aushärtung durch chemische Reaktion vorzugsweise erst bei einer erhöhten Temperatur in Gang gesetzt oder wesentlich beschleunigt wird.

Vorzugsweise weisen die organischen Klebschichten keine Zusätze wie Partikel oder sonstige Substanzen auf, die die Festigkeit verringern und/oder das Fließverhalten nachteilig erhöhen. Hierzu gehören insbesondere bei Farben auf Basis von Epoxidharzen Farbpigmente zur Einstellung eines Farbtons und/ oder zur Vermeidung von Korrosion, sowie Kohlenstoff- oder Teerbestandteile oder andere Substanzen zur Einstellung und/ oder Erhöhung der Elastizität.

In der Klebschicht sind zudem **Feststoffpartikel** ein- und/oder angebunden. Die Feststoffpartikel bestehen vorzugsweise aus einem nicht metallischen anorganischen und/oder einem metallischen Material, d. h. aus Materialien die vorzugsweise eine stoffschlüssige Verbindung zu einem bevorzugten mineralischen Bindemittel des Füllmaterials ermöglichen. Nichtmetallisch anorganische Feststoffpartikel bestehen vorzugsweise aus Siliziumverbindungen, einer Gesteinskörnung wie vorzugsweise Edelkorund, Quarzsand oder Kiessplitt, die auch als Zuschlagsstoffe für mineralische hydraulische Bindemittel bekannt sind. Metallische Feststoffpartikel bestehen vorzugsweise aus Stahldrahtkorn, Stahlsplitt oder Stahlgusskugeln. Insbesondere die gegenüber dem Abbindevorgang des Füllmaterials exponierten Oberflächen der Feststoffpartikel reagieren vorzugsweise mit dem mineralischen Bindemittel oder anderen Inhaltsstoffen des Füllmaterials.

Die Klebschicht ist im Rahmen einer alternativen Ausgestaltung der Erfindung als anorganische Klebschicht ausgeführt, beispielsweise als **Emaillierung** aus glasbildenden Oxiden der Fügeflächen. Derartige Schichten schließen in vorteilhafter Weise plastische Verformungen praktisch vollständig aus, und dies auch bei erhöhten Temperaturen unterhalb der Glaserweichungstemperatur, insbesondere zwischen 100 und 600°C. Die Feststoffpartikel bestehen vorzugsweise aus Metall- oder Keramikpartikeln (insbesondere Nitride, Karbide, Oxide wie z. B. Korund, Al₂O₃, Si₃N₄, SiC, B₄C, BN, TiN, WC etc.) mit Schmelz- oder Erweichungstemperaturen oberhalb der Emaillierungstemperatur (z. B. zwischen 800 und 900°C).

Ein **Verfahren** zur Herstellung einer Verbindung zwischen zwei Fügepartnern mit einem Fügespalt mit gegenüberliegenden Fügeflächen umfasst die folgenden Verfahrensschritte in der angegebenen Reihenfolge:
a) Beschichtung mindestens einer der Fügeflächen mit einer organischen Klebschicht mit ein- und/oder angebundenen Feststoffpartikeln,
b) Aushärtung der organischen Klebschicht,
c) Aneinandersetzen der beiden Fügepartner, wobei deren Fügeflächen unter Bildung des Fügespalts sich zumindest teilweise gegenüberstehen,
d) Auffüllen des Fügespalts mit einem anorganischen Füllmaterial sowie
e) Aushärtung des anorganischen Füllmaterials im Fügespalt.

Das beschriebene Vorgehen führt insbesondere zu einer erheblichen Kostenreduktion und Tragfähigkeitssteigerung der Verbindung. Der besondere Vorteil des Verfahrens liegt darin, dass die Schritte a) und b) im Rahmen einer Vorbereitung der Fügepartner nicht nur vor Ort an einer Baustelle, sondern vorzugsweise an anderer Stelle unter besseren und insbesondere besser kontrollierbaren und einhaltbare Verfahrensbedingungen (insbes. bez. Klima, Feuchtigkeit, Temperatur, Atmosphäre, Verunreinigungsgefahr, Arbeitsbedingungen, Werkzeugverfügbarkeit, Handhabung der Fügepartner, Fertigungsgenauigkeit, Wirtschaftlichkeit) durchführbar ist. Die Herstellung der sehr sensitiven organischen Klebverbindung erfolgtdamit in vorteilhafter Weise im Bereich der Vorfertigung der Fügeteile z. B. in einem Herstellbetrieb unter definierten Bedingungen (industriell unter geschützten Bedingungen). Beispielsweise ermöglicht dies nicht nur eine Oberflächenvorbereitung der Fügeflächen wie z. B. eine Aufrauhung, eine Trocknung oder eine Temperierung mit einer Genauigkeit und unter Umgebungsbedingungen, die vor Ort auf einer Baustelle gegenüber einer Vorbereitung in einer bevorzugt geschlossenen Werkstatt nicht oder nur unter ungleich größeren Aufwand möglich sind. Die Umgebungsbedingungen lassen sich dabei bevorzugt auf die Werte (Temperatur, Luftfeuchte, Atmosphäre) einstellen, die für eine Verarbeitung und Aushärtung des Klebstoffs ideal sind.

Dagegen erfolgen (bevorzugt nur) die Verfahrensschritte c) bis e), bei denen lediglich die vorbereiteten Fügepartner in Position gebracht und nur das Füllmaterial, vorzugsweise ein Vergussmörtel der vorgenannten Art vorbereitet und verarbeitet müssen, bevorzugt bauüblich vor Ort unter Baustellenbedingungen (d. h. im Bauwesen üblichen Anforderungen an Umgebungsbedingungen, Personalqualifikation und Applikationstechnik) z. B. auf einer Baustelle des Hochbaus, Brückenbaus, Anlagenbaus oder On- und Offshore Windenergieanlagenbaus.

Weiterhin haben die Verbindung und das Verfahren einen erheblichen wirtschaftlichen Vorteil im Vergleich zu zeit- und kostenintensiven Schweißverbindungen oder den teureren und hinsichtlich der Fertigung komplexen und fehleranfälligeren Klebverbindungen unter ausschließlicher Verwendung eines organischen Klebstoffs.

In einer ersten Verfahrensausführung erfolgt die Beschichtung der Fügeflächen zunächst in einem ersten Teilschritt mit einem Auftragen der Klebschicht zunächst ohne die Feststoffpartikel. Die Feststoffpartikel werden dann anschließend in einem zweiten Teilschritt auf die Klebeschicht aufgetragen. Diese Ausführung eignet sich insbesondere zur Realisierung eines hohen gegenüber dem Abbindevorgang des Füllmaterials exponierten Oberflächenanteils, d. h. sie ist besonders bei einem Füllmaterial mit hohen Anteil von mineralischen Bindemittel vorteilhaft. Zudem erfolgt eine signifikante Erhöhung der Oberflächenrauigkeit der Klebschicht, was neben der stoffbündigen auch die formschlüssige Anbindung noch weiter verbessert.

Die Verbindung zwischen Füllmaterial und der organischen Klebschicht mit den gegebenenfalls eingebrachten Feststoffpartikeln erfolgt im Rahmen einer alternativen Ausgestaltung durch eine chemische oder physikalische Aktivierung nach dem Aushärten des Füllmaterials. Die Verbindung zwischen einem hybriden Füllmaterial bestehend aus organischen und anorganischen Komponenten sowie der anorganischer Klebschicht erfolgt über eine chemische oder physikalische Aktivierung nach dem Aushärten des anorganischen Füllmaterials vorzugsweise durch Induktion, Temperatur, Mikrowelle oder zeitversetzte chemische Reaktionen.

In einer zweiten Verfahrensausführung erfolgt die Beschichtung der Fügeflächen mit einem Auftragen der Klebschicht gemeinsam mit den Feststoffpartikeln. Vorzugsweise werden die Feststoffpartikel vor dem Auftragen mit dem Klebstoff vermischt, was in vorteilhafter Weise eine homogene Durchmischung unterstützt.

Weitere Ausführungen sehen eine Klebschicht vor, die aus mehreren seriell aufeinander aufgetragenen Einzelschichten besteht. Die Einzelschichten unterscheiden sich vorzugsweise im Feststoffpartikelgehalt. Eine bevorzugte Ausführung hierzu sieht vor, die Einzelschicht unmittelbar auf der Fügefläche für eine optimierte stoffschlüssige Anbindung ohne Feststoffpartikel vorzusehen, auf diese mindestens eine weitere Einzelschicht mit Feststoffpartikeln vorzusehen und optional anschließend auf die oberste Einzelschicht Feststoffpartikel aufzutragen.

Nach Aushärtung der Klebschicht erfolgt die Vormontage der Fügepartner auf der Baustelle, wobei der Fügespalt einen Ausgleich von Fertigungsungenauigkeiten ermöglicht. Die Ausführung einer tragfähigen Hybridklebverbindung erfolgt schließlich durch das kontrollierte Einbringen und Abbinden des Vergussmörtels in den Fügespalt.

Alternativ ist im Fügespalt oder im Füllmaterial eine Bewehrung in Form von Fasern oder Strukturen wie Stangen oder konstruktiv steif gestaltete Formkörper aus Metall, Glasfasern, Kunststoffen oder Karbonfasern eingebracht. Sie dienen der Versteifung und/oder Festigkeitserhöhung des Füllmaterials, erhöhen die Bruchdehnung und/oder behindern einen Rissfortschritt und damit ein vorzeitiges Versagen des Füllmaterials.

Eine Ausführung sieht vor, die vorgenannte Bewehrung bei der Einbringung der Klebschichten gleich mit einem Teil mit in den Klebstoff einzubinden, während der verbleibende andere Teil aus der Klebschicht herausragt und durch das Füllmaterial der vorgenannten Art, vorzugsweise ein Vergussmörtel eingebunden wird. Damit steigt die Anbindung des Füllmaterials zur Kleb-, schicht signifikant.

Eine alternative Ausgestaltung sieht eine Verwendung eines z. B. physikalisch oder chemisch aktivierbaren organischen Klebstoffes vor. Dieser wird im Rahmen des Verfahrensschritts a) vorzugsweise abseits der Baustelle auf die Fügeflächen aufgebracht und die Aushärtung gemäß Verfahrensschritt b) erst zu einem späteren Zeitpunkt, d. h. erst nach einem der nachfolgend genannten Verfahrensschritte c), d) oder e) aktiviert. Auf der Baustelle vor Ort werden dann die Fügepartner mit dem noch nicht ausgehärteten Klebstoff aneinandergesetzt (Verfahrensschritt c)) und der Fügespalt dann mit Vergussmörtel verfüllt (Schritt d)). Anschließend wird ein bevorzugt stoffschlüssiger Verbund zwischen Vergussmörtel und Fügeflächen durch physikalische (Wärmeinbringung z. B. durch Induktion oder Infrarotstrahlung) oder chemische Aktivierung (z. B. durch Alkalität) der Klebschicht hergestellt. Vorzugsweise erfolgt die Aushärtung des Füllmaterials (Vergussmörtel) dabei noch vor nach einer Aushärtung der Klebschicht.

Vor einem Eingießen des Füllmaterials in den Fügespalt ist sicherzustellen, dass er den Füllspalt und vorzugsweise nur diesen bevorzugt vollständig ausfüllt. Es wird vorgeschlagen, dass der Fügespalt um die Fügeflächen herum vor dem Ausfüllen des Füllmaterials mit Dichtmitteln versehen wird und damit zu einem abgesehen von mindestens einem Einguss und optional einem Steigervolumen ansonsten abgeschlossenen Fügespaltvolumen verschlossen wird.

Die Verbindung weist folgende Vorteile auf: '
- Hohe Qualität und Fertigungssicherheit der Klebverbindung durch die Herstellung der qualitativ anspruchsvollen organischen Dünnschichtklebung abseits der Baustelle, z. B. in einem Herstellwerk.
- Erhebliche Kosteneinsparung durch die Verwendung von Vergussmörtel im Vergleich zur Spaltfüllung mit organischem

Klebstoff (Kostenfaktor bis über 100).
- Verbindung verursacht' nur geringe lokale Spannungsüberhöhungen, die durch die besondere Gestaltung der Verbindung verursacht werden. Laborversuche zeigten folglich sehr hohe Tragfähigkeiten mit äußerst geringen Streuungen (Versagenslasten: Faktor 10 zur klassischen Vermörtelung, höhere Festigkeiten als organische Dickschichtverklebungen).
- Durch die Verwendung eines dicken Fügespaltes können Herstell- und Montagetoleranzen ausgeglichen werden.
- Im Gegensatz zum Schweißen erfolgt kein schädlicher Wärmeeintrag in die Fügeteile, d. h. die Bauteile können außen schon fertig beschichtet geliefert werden, ein Nachbeschichten auf der Baustelle entfällt.
- Im Vergleich zu Schraub- und Nietverbindungen erfolgt die

Lasteintragung nicht lokal sondern flächig.
- Da keine Kerbwirkung durch Schweißnähte oder lokale Lasteinleitungsstellen (z. B. Schrauben) entsteht, kann von einer hohen Ermüdungsfestigkeit ausgegangen werden.

Die Erfindung und mögliche Ausgestaltung von Details werden anhand mit Ausführungsbeispielen mit den folgenden Figuren näher erläutert. Es zeigen
**Fig.1** eine Schnittdarstellung einer Ausführungsform mit zwei konzentrisch ineinander angeordneten Rohren als Fügepartner und zylinderförmig umlaufenden Ringspalt als Fügespalt,
**Fig.2a** **bis d** jeweils eine Schnittdarstellung einer Klebschicht **(****Fig.2a** **und b)** sowie eines Klebschichtverbunds **(****Fig.2c** **und d),** jeweils mit angrenzenden Fügepartner und Füllmaterial,
**Fig.3** eine Schnittdarstellung einer beispielhaften Mastverankerung mit nicht zylinderförmig umlaufenden Ringspalt sowie
**Fig.4** exemplarisch einer Last-Verformungskurven einer Prüfung einer Rohrverbindung gem. **Fig.1** (durchgezogener Verlauf) im Vergleich einer herkömmlichen vermörtelten Rohrverbindung ohne eine Klebschicht der vorgenannten Art (gestrichelter Verlauf) im axialen Zugversuch.

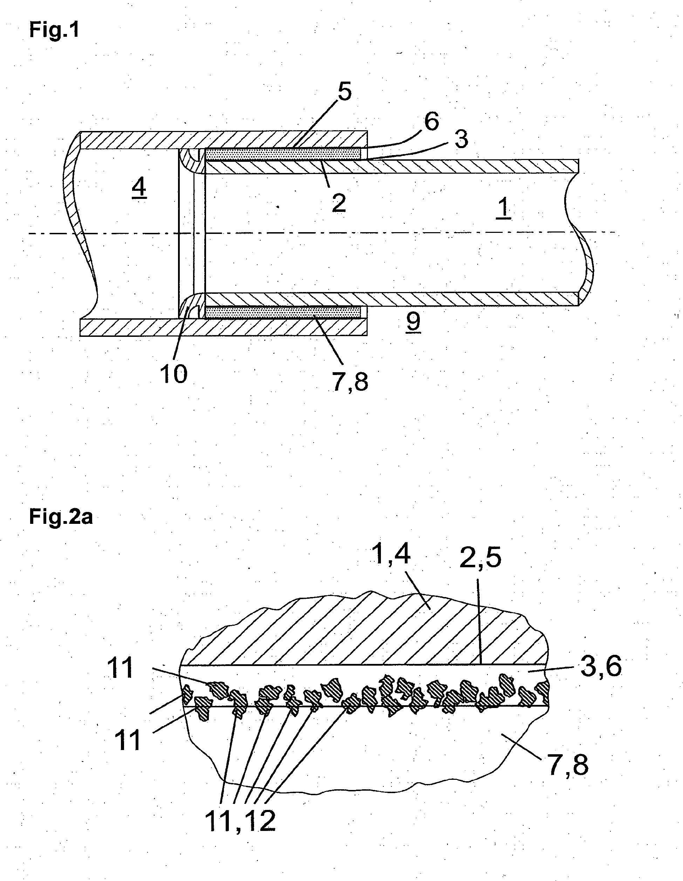

Die in **Fig.1** dargestellte Schnittdarstellung zeigt eine Ausführungsform mit einem Innenrohr **1** mit einer außen liegenden zylindrische Fügefläche **2** und einer auf dieser aufgetragenen ersten Klebschicht **3.** Konzentrisch um das Innenrohr ist ein Außenrohr **4** angeordnet, das eine innen angeordnete zylindrische Fügefläche **5** aufweist, die mit einer zweiten Klebschicht **6** beschichtet ist. Innenrohr und Außenrohr bilden im Ausführungsbeispiel , die Fügepartner, die mit ihren jeweiligen Fügeflächen einen Fügespalt **7** bilden, der mit Füllmaterial **8** ausgefüllt ist. Das Füllmaterial besteht bevorzugt aus einem in nicht ausgehärten Zustand fließfähigen Vergussmörtel, bei vertikaler Ausrichtung der Rohre von oben in eine offenen Seite **9** des Fügespalts eingegossen wird (die in **Fig.1** abgebildete Darstellung müsste hierzu um 90° nach links gedreht werden) und gegen ein Ausfließen am anderen (unteren) Ende des Fügespalts durch einen Verschlussringstopfen **10** abgedichtet sein. Müsste der Fügespalt bei nicht vertikaler Ausrichtung mit einem zunächst fließfähigen Füllmaterial gefüllt werden, ist der Fügespalt beidseitig durch Dichtmittel wie dem vorgenannten Verschlussringstopfen zu verschließen, wobei der jeweils höher liegende Verschlussstopfen am jeweils oberen Ende einen Einguss und vorzugsweise auch ein Steigervolumen aufweist.

Ausgestaltungen der Klebeschichten **3** und/oder **6** mit Feststoffpartikel **11** zeigen **Fig.2a** **bis c** jeweils in einer Schnittansicht im Detail.

**Fig.2a** repräsentiert eine Ausgestaltung, bei der die Beschichtung der Fügeflächen **2** und/oder **5** gemäß der vorgenannten ersten Verfahrensausführung zunächst in einem ersten Teilschritt zunächst ohne die Feststoffpartikel, alternativ mit einem geringem Anteil der Feststoffpartikel (z. B. 20 bis maximal 50 % des auf die Beschichtung im Endzustand bezogenen Feststoffpartikelanteils) erfolgt. Die Feststoffpartikel oder die restlichen Feststoffpartikel werden dann anschließend in einem zweiten Teilschritt auf die noch nicht angebundene Klebschicht aufgetragen und werden von dieser teilweise oder ganz aufgenommen. Die nur teilweise umschlossenen Feststoffpartikelanteile **12** weisen in dieser Ausgestaltung in besonders vorteilhafter Weise einen noch nie zuvor von Klebstoff benetzten Oberflächenanteil auf, womit in vorteilhafter Weise eine verbesserte Anbindung an einen mineralischen Füllstoff erfolgt.

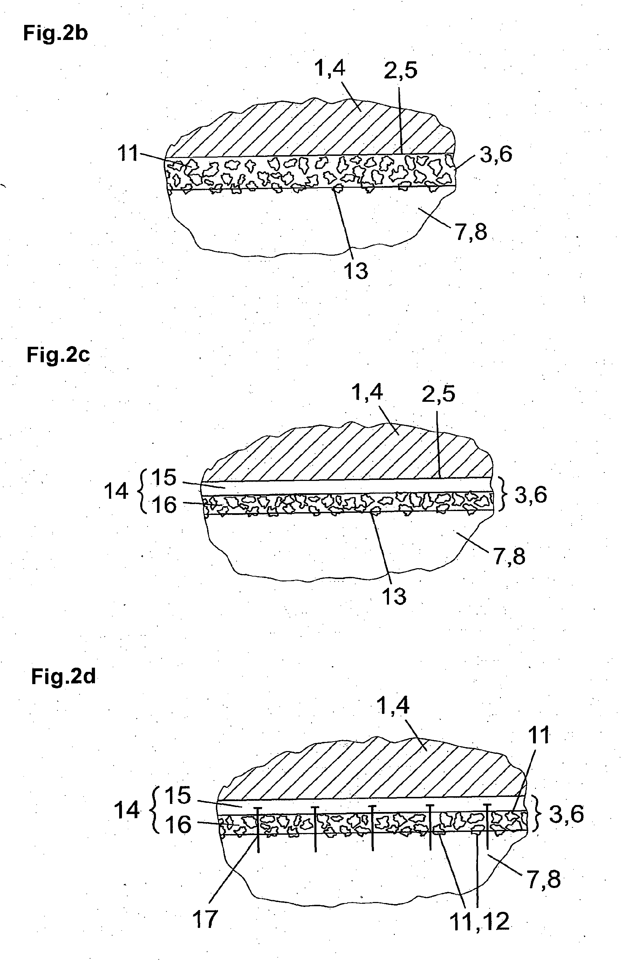

**Fig.2b** repräsentiert eine Ausgestaltung, bei der die Beschichtung der Fügeflächen **2** und/oder **5** gemäß der vorgenannten zweiten Verfahrensausführung gemeinsam mit den Feststoffpartikeln auf die Fügefläche aufgetragen wird. Hier sind die Partikel vorzugsweise vollständig von dem Klebstoff benetzt, wobei ein Teil der Feststoffpartikel jedoch aus der Klebstoffoberfläche **13** herausragen und sich mit dem Füllstoff **8** formschlüssig verbinden können.

**Fig.2c** repräsentiert eine Ausgestaltung, bei der die Beschichtung 3 aus einem Schichtverbund **14** aus beispielsweise zwei seriell aufeinander aufgetragenen Einzelschichten besteht. Die Einzelschichten unterscheiden sich vorzugsweise im Feststoffpartikelgehalt. Die zuerst auf der Fügefläche aufgebrachte erste Einzelschicht **15** weist im dargestellten Beispiel keine Feststoffpartikel auf und dient damit funktionell als Grundierung für die auf diese aufgetragene zweite Einzelschicht **16** mit eingebundenen Feststoffpartikeln **11.**

Im Rahmen einer speziellen Ausgestaltung wird die erste Einzelschicht **15** vorzugsweise ohne Feststoffpartikel gemeinsam mit Bewehrungskomponenten **17** aufgetragen **(****Fig.2d****).** Die zweite Einzelschicht **16** entspricht in ihrem Aufbauund in der Herstellung der in **Fig.2a** gezeigten Klebschicht. Die Bewehrungskomponenten, vorzugsweise in Form von Fasern oder Strukturen wie Stangen oder konstruktiv steif gestaltete Formkörper aus Metall, Glasfasern, Kunststoffen oder Karbonfasern oder - wie dargestellt - nagelförmige Metallstifte oder alternativ beidseitig gekröpfte Zuganker, ragen vorzugsweise aus dem Schichtverbund **14** in das Füllmaterial hinein und verzahnen sich mit diesem während des Abbindens formschlüssig.

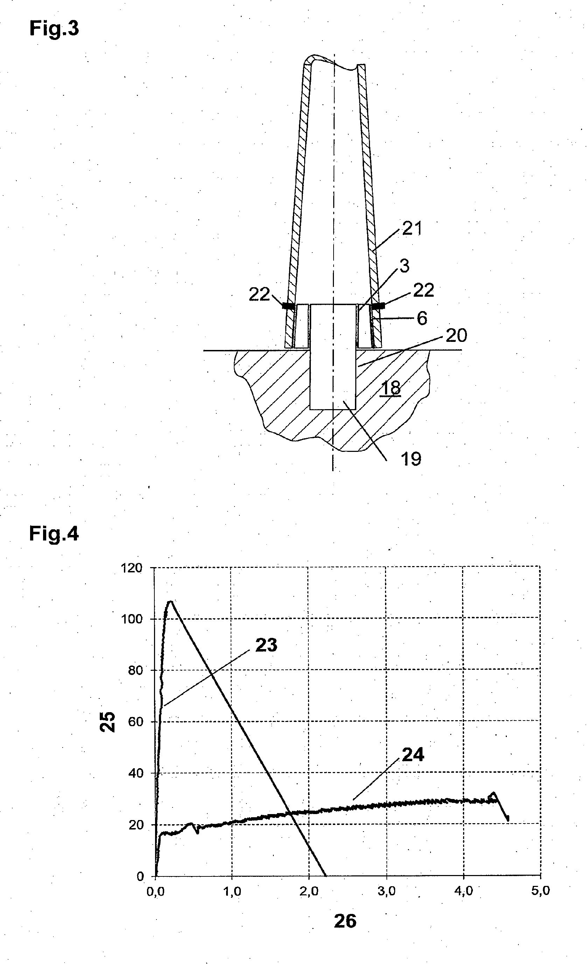

**Fig.3** zeigt eine Schnittdarstellung einer beispielhaften Bodenverankerung eines Mastes mit nicht zylinderförmig umlaufenden Ringspalt **7.** Der erste Fügepartner besteht aus einem in ein Betonfundament **18** vertikal eingelassenen vorzugsweise zylinderförmigen Poller **19,** dessen Mantelfläche **20** oberhalb des Betonfundaments die Fügeflächen bilden. Der zweite Fügepartner besteht aus einem bevorzugt metallischen Mast **21** mit innenliegender Fügefläche, der mit seinem unten offenen Ende über den Poller geschoben wird, wobei die beiden Fügeflächen, mit je einer Klebschicht **3** und **6** den Fügespalt **7** für das Füllmaterial **8** lateral begrenzen. Die Befüllung des Fügespalts mit bevorzugt fließfähigen Füllmaterial erfolgt vorzugsweise seitlich über Angussöffnungen **22** im Mast im Bereich der Fügeflächen. Diese sind im Mastumfang vorzugsweise im gleichen Winkel zueinander verteilt angeordnet. Über die mit einem Abbinden des Füllmaterials in den Angussöffnungen wird in vorteilhafter Weise eine zusätzliche formschlüssige Anbindung an die Fügeflächen ermöglicht.

Zur Untersuchung der axialen Tragfähigkeit einer Verbindung mit koaxial ineinander angeordneten Stahlrohren, wie sie beispielhaft in **Fig.1** dargestellt ist, wurden Zugversuche durchgeführt. Das innere Rohr und damit die außen liegende Fügefläche des Innenrohrs weisen dabei einen Durchmesser von 33,7 mm, das äußere Rohr und damit die innen liegende Fügefläche des Innenrohrs einen Durchmesser von 68,1 mm auf. Damit ergibt sich eine Fügespaltbreite von 17,2 mm, die sich in axialer Richtung über eine Überlappungslänge von 45 mm erstreckt. Die Klebschicht besteht dabei aus einer Matrix aus dem Epoxidharz-Klebstoff des Typs EP40617/EP42089 (der Fa. Kömmerling, Pirmasens, Deutschland), auf die nachfolgend angeführten als Feststoffpartikel auf die frisch aufgetragene Klebschicht aufgestreut wurden, bis keine Festst,offpartikel mehr in die Klebschicht eintreten, bzw. auf dieser haften bleiben:
- Versuchsserie 1: Klebschicht mit Edelkorund als Feststoffpartikel (Edelkorund KF100, Körnung < 0,1 mm
- Versuchsserie 2: Klebschicht mit Quarzsand als Feststoffpartikel (Körnung < 2,0 mm)
- Versuchsserie 3: Klebschicht mit Kiessplitt als Feststoffpartikel (Körnung < 4,0 mm)

Zum Vergleich wurde eine weitere Versuchsserie 4 mit gleichen Fügepartner und Füllmaterial, jedoch ohne Klebschicht und Feststoffpartikel durchgeführt. In nachfolgender **Tab.1** sind die Prüflasten der vorgenannten Versuchsserien zusammengefasst:

**Tab.1: Axiale Tragfähigkeiten der Versuchsserien 1 bis 4**

| Versuchserie | Probe | Fmax [kN] | |
|---|---|---|---|
| | | Haftverbund | Resttragfähigkeit infolge Reibung |
| 1 | 1-01 | 104,6 | |
| 1 | 1-02 | 106,9 | |
| 1 | 1-03 | 109,1 | |
| 2 | 2-01 | 111,4 | |
| 2 | 2-02 | 110,6 | |
| 2 | 2-03 | 111,6 | |
| 3 | 3-01 | 111,0 | |
| 3 | 3-02 | 110,9 | |
| 3 | 3-03 | 109,5 | |
| 4 | 4-01 | 10,2 | 25,5 |
| 4 | 4-02 | 12,5 | 37,5 |
| 4 | 4-03 | 15,0 | 28,3 |

Es ist eine etwa 10-fache Steigerung der Tragfähigkeit der mit organischen Klebschichten und Feststoffpartikeln modifizierten Verbindung im Vergleich zur herkömmlichen Vermörtelung ohne Klebschicht festzustellen. Das Versagen erfolgt jedoch im elastischen Bereich, d. h. nach einem Versagen des Haftverbunds ist im Gegensatz zu der herkömmlichen Vermörtelung und ohne eine die Zähigkeit erhöhende Bewehrung des Füllmaterials der vorgenannten Art keine Resttragfähigkeit der Verbindung mehr vorhanden. Sie sinkt nach wenigen mm weiterer Verschiebung auf 0 kN ab. Dieser Effekt ist dem bevorzugt fließarmen und damit spröden Verhaltens des Klebstoffs geschuldet. Hierbei sei jedoch auch auf die äußerst geringe Streuung der Bruchlasten der hybrid geklebten Rohre hingewiesen. Es kann davon ausgegangen werden, dass dieses Versagensbild durch Verwendung eines weniger spröden Klebstoffs oder die zusätzliche Bewehrung des Mörtels verändert wird.

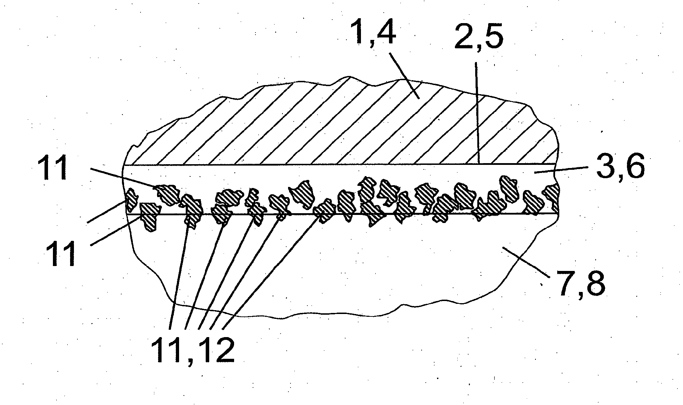

**Fig.4** zeigt ein Diagramm, in dem die Zugkraft **25** in [kN] über die Lokalverformung **26** in [mm] aufgetragen ist. Exemplarisch dargestellt sind die Last-Verformungskurven **23** und **24** einer Prüfung einer Rohrverbindung gem. **Fig.1 und 2a** (mit zwei Klebschichten, **23**) im Vergleich einer herkömmlichen vermörtelten Rohrverbindung ohne eine Klebschicht der vorgenannten Art (**24**) im axialen Zugversuch.

### Literatur:

[1] Internet-Auftritt der SKI Schaumann & Keindorf Ingenieurges. mbH (Stand 26.11.2014): http://www.ski-consult.de/verbindungstechnik/grouted-joints.html
[2] DE 103 30 963 A1
DE 10 2012 001 943 A1
US 4 752 151 A
DE 199 58 375 A1

### Bezugszeichenliste:

- 1: Innenrohr
- 2: außen liegende Fügefläche des Innenrohrs
- 3: erste Klebschicht
- 4: Außenrohr
- 5: innen angeordnete Fügefläche des Außenrohrs
- 6: Klebschicht
- 7: Fügespalt
- 8: Füllmaterial
- 9: offene Seite des Fügspalts
- 10: Verschussringstopfen
- 11: Feststoffpartikel
- 12: teilweise umschlossener Feststoffpartikelanteil
- 13: Klebstoffoberfläche
- 14: Schichtverbund
- 15: erste Einzelschicht
- 16: zweite Einzelschicht
- 17: Bewehrungskomponenten
- 18: Betonfundament
- 19: Poller
- 20: Mantelfläche
- 21: Mast
- 22: Angussöffnung
- 23: Last-Verformungskurve Verbindung mit Klebschichten
- 24: Last-Verformungskurve herkömmliche Verbindung
- 25: Zugkraft in [kN]
- 26: Lokalverformung in [mm]

## Patentansprüche

1. Verbindung zwischen mindestens zwei Fügepartnern **(1, 4)** mit einem dazwischen liegenden Fügespalt **(7)** mit gegenüberliegenden Fügeflächen **(2, 5)**,
**dadurch gekennzeichnet, dass**
mindestens eine der Fügeflächen mit einer Klebschicht **(3, 6)** mit ein- und/oder angebundenen Feststoffpartikeln **(11, 12)** benetzt ist und der verbleibende Fügespalt mit einem anorganischen und/oder organischen Füllmaterial **(8)** gefüllt ist, wobei das Füllmaterial ein Vergussmörtel oder ein anorganischer hydraulisch oder unhydraulisch abbindender Werkstoff ist.

2. Verbindung nach Anspruch 1, **dadurch gekennzeichnet, dass** die Klebschicht **(3, 6)** durch einen Schichtverbund **(14)** mit mindestens zwei Einzelschichten **(15, 16)** gebildet ist.

3. Verbindung nach Anspruch 1 oder 2, **dadurch gekennzeichnet, dass** im Fügespalt **(7)** oder im Füllmaterial **(8)** oder im Füllmaterial in die Klebeschicht **(3, 6)** hineinreichend eine Bewehrung **(17)** in Form von Fasern oder Strukturen aus Metall, Glas, Kunststoffen oder Karbon eingebracht ist.

4. Verbindung nach einem der vorgenannten Ansprüche, **dadurch gekennzeichnet, dass** zwei Fügepartner **(1, 4)** durch einen Stecker vorzugsweise mit einer rotationssymmetischen Außenfläche und durch eine Muffe, vorzugsweise mit einer umlaufenden, vorzugsweise rotationsymmebrischen Innenfläche gebildet werden.

5. Verbindung nach einem der vorgenannten Ansprüche, **dadurch gekennzeichnet, dass** die beiden Fügepartner **(1, 4)** durch zwei ineinander angeordnete Rohrelemente mit unterschiedlichen Durchmesser gebildet sind.

6. Verbindung nach einem der vorgenannten Ansprüche, **dadurch gekennzeichnet, dass** der Fügespalt über die Erstreckung der Fügeflächen unterschiedliche Fügespaltbreiten und/oder die Klebeschicht und/oder das Füllmaterial über die Erstreckung der Fügeflächen unterschiedliche Schichtdicken aufweisen.

7. Verbindung nach einem der vorgenannten Ansprüche, **dadurch gekennzeichnet, dass** die Feststoffpartikel **(11, 12)** aus einem nicht metallischen anorganischen und/oder einem metallischen Material bestehen.

8. Verfahren zur Herstellung einer Verbindung zwischen zwei Fügepartnern **(1, 4)** mit einem Fügespalt **(7)** mit gegenüberliegenden Fügeflächen **(2, 5),** umfassend die folgenden Verfahrensschritte in der angegebenen Reihenfolge:
a) Beschichtung mindestens einer der Fügeflächen mit einer organischen Klebschicht **(3, 6)** mit ein- und/oder angebundenen Feststoffpartikeln **(11, 12),**
b) Aushärtung der organischen Klebschicht,
c) Aneinandersetzen der beiden Fügepartner, wobei deren Fügeflächen unter Bildung des Fügespalts sich zumindest teilweise gegenüberstehen,
d) Auffüllen des Fügespalts mit einem organischen und/oder anorganischen Füllmaterial **(8)** sowie
e) Aushärtung des Füllmaterials im Fügespalt.

9. Verfahren nach Anspruch 8, **dadurch gekennzeichnet, dass** die Beschichtung der Fügeflächen gemäß Verfahrensschritt a) zunächst in einem ersten Teilschritt mit der Klebschicht erfolgt und anschließend in einem zweiten Teilschritt ein Auftragen der Feststoffpartikel auf die Klebeschicht erfolgt.

10. Verfahren nach einem der Ansprüche 8 oder 9, **dadurch gekennzeichnet, dass** eine Verklebung zwischen Füllmaterial und Feststoffpartikel durch eine chemische oder physikalische Aktivierung nach dem Aushärten des anorganischen Füllmaterials erfolgt.

11. Verfahren nach einem der Ansprüche 8 bis 10, **dadurch gekennzeichnet, dass** der Formschluss zwischen dem Füllmaterial bestehend aus organischen und/oder organischen und anorganischen Komponenten sowie der anorganischer Klebschicht durch eine chemische oder physikalische Aktivierung nach dem Aushärten des anorganischen und/oder organischen Füllmaterials erfolgt.

12. Verfahren nach einem der Ansprüche 8 bis 11, **dadurch gekennzeichnet, dass** nur die Verfahrensschritte a) und b) an einer anderen Stelle erfolgen als die Verfahrensschritte c) bis e).

13. Verfahren nach einem der Ansprüche 8 bis 12, **dadurch gekennzeichnet, dass** der Fügespalt vor dem Auffüllen mit Dichtmitteln **(10)** mit mindestens einem Einguss und einem Steigervolumen zu einem ansonsten abgeschlossenen Fügespaltvolumen verschlossen wird.

## Claims

1. Connection between at least two joining partners (1, 4), with a joint gap (7) located in between, with opposing joint surfaces (2, 5),
**characterised in that**
at least one of the joint surfaces is wetted with an adhesive layer (3, 6) with solid particles (11, 12) integrated and/or bonded to it, and the remaining joint gap is filled with an inorganic and/or organic filling material (8), wherein the filling material is a cast mortar or an inorganic hydraulic or non-hydraulic hardening material.

2. Connection according to claim 1, **characterised in that** the adhesive layer (3, 6) is formed by a layer compound (14) with at least two individual layers (15, 16).

3. Connection according to claim 1 or 2, **characterised in that** a reinforcement material (17), in the form of fibres or structures made of metal, glass, plastics, or carbon, is introduced in the joint gap (7), or in the filling material (8), or in the filling material extending into the adhesive layer (3, 6).

4. Connection according to any one of the preceding claims, **characterised in that** two joining partners (1, 4) are formed by a plugging element, preferably with a rotationally symmetrical outer surface, and by a sleeve, preferably with a circumferential, preferably rotationally symmetrical, inner surface.

5. Connection according to any one of the preceding claims, **characterised in that** the two joining partners (1, 4) are formed by two tubular elements arranged inside one another and with different diameters.

6. Connection according to any one of the preceding claims, **characterised in that** the joint gap exhibits different joint gap widths over the extension of the joint surfaces and/or the adhesive layer and/or the filling material exhibit different layer thicknesses over the extension of the joint surfaces.

7. Connection according to any one of the preceding claims, **characterised in that** the solid particles (11, 12) consist of a non-metallic inorganic and/or a metallic material.

8. Method for producing a connection between two joining partners (1, 4) with a joint gap (7) with opposing joint surfaces (2, 5), comprising the following method steps in the specified sequence:
a) Coating of at least one of the joint surfaces with an organic adhesive layer (3, 6) with solid particles (11, 12) integrated and/or bonded to it,
b) hardening of the organic adhesive layer,
c) bringing the two joining partners together, wherein their joint surfaces are at least partially opposed, forming a joint gap,
d) filling the joint gap with an organic and/or inorganic filling material (8), and
e) hardening of the filling material in the joint gap.

9. Method according to claim 8, **characterised in that** the coating of the joint surfaces according to method step a) takes place initially in a first part step with the adhesive layer, and then, in a second part step, an application of solid particles onto the adhesive layer takes place.

10. Method according to any one of claims 8 or 9, **characterised in that** an adhesive bonding takes place between the filling material and solid particles by means of a chemical or physical activation after the hardening of the inorganic filling material.

11. Method according to any one of claims 8 to 10, **characterised in that** the positive fit connection between the filling material, consisting of organic and/or organic and inorganic components, and the inorganic adhesive layer takes place by means of a chemical or physical activation after the hardening of the inorganic and/or organic filling material.

12. Method according to any one of claims 8 to 11, **characterised in that** only the method steps a) and b) take place at another place than the method steps c) to e).

13. Method according to any one of claims 8 to 12, **characterised in that**, before filling with sealing agents (10), the joint gap is closed with at least one insert element and an inflating volume to form an otherwise completed joint gap volume.

## Revendications

1. Liaison entre au moins deux partenaires d'assemblage (1, 4) avec un intervalle d'assemblage (7) entre deux surfaces d'assemblage (2, 5) qui se font face,
**caractérisée en ce que**
- au moins l'une des surfaces d'assemblage est mouillée avec une couche de colle (3, 6) avec des particules solides (11, 12) intégrées et/ou attachées à celle-ci, le restant de l'intervalle d'assemblage étant rempli d'un matériau de remplissage anorganique et/ou organique (8),
le matériau de remplissage étant un mortier coulé ou un matériau liant anorganique hydraulique ou non-hydraulique.

2. Liaison selon la revendication 1,
**caractérisée en ce que**
la couche de colle (3, 6) est une combinaison de couches (14) comprenant au moins deux couches distinctes (15, 16).

3. Liaison selon la revendication 1 ou 2,
**caractérisée en ce que**
un renfort (17) sous la forme de fibres ou de structures en métal, verre, matière plastique ou carbone est introduit dans l'intervalle d'assemblage (7) ou de matériau de remplissage (8) ou le matériau de remplissage dans la couche de colle (3, 6).

4. Liaison selon l'une des revendications précédentes,
**caractérisée en ce que**
deux partenaires d'assemblage (1, 4) sont formés par un connecteur ayant de préférence une surface extérieure symétrique en rotation et par un manchon, de préférence avec une surface intérieure périphérique, en particulier symétrique en rotation.

5. Liaison selon l'une des revendications précédentes,
**caractérisée en ce que**
les deux partenaires d'assemblage (1, 4) sont formés par deux éléments tubulaires de diamètres différents engagés l'un dans l'autre.

6. Liaison selon l'une des revendications précédentes,
**caractérisée en ce que**
sur l'extension des surfaces d'assemblage, l'intervalle d'assemblage a des largeurs d'intervalle différentes et/ou sur l'extension des surfaces d'assemblage la couche de colle et/ou le matériau de remplissage ont des épaisseurs de couches différentes.

7. Liaison selon l'une des revendications précédentes,
**caractérisée en ce que**
les particules solides (11, 12) sont en un matériau anorganique non métallique, et/ou un matériau métallique.

8. Procédé de réalisation d'une liaison entre deux partenaires d'assemblage (1, 4) avec un intervalle d'assemblage (7) et des surfaces d'assemblage (2, 5) qui se font face, comprenant les étapes suivantes consistant dans l'ordre à :
a) revêtir au moins l'une des surfaces d'assemblage avec une couche de colle organique (3, 6) avec des particules solides (11, 12) intégrées et/ou fixées à celle-ci,
b) faire durcir la couche de colle organique,
c) rapprocher l'un contre l'autre les deux partenaires d'assemblage, leur surface d'assemblage se faisant au moins partiellement face en formant l'intervalle d'assemblage,
d) remplir l'intervalle d'assemblage avec un matériau de remplissage (8) organique et/ou anorganique, et
e) faire durcir le matériau de remplissage dans l'intervalle d'assemblage.

9. Procédé selon la revendication 8,
**caractérisé en ce que**
le revêtement des surfaces d'assemblage selon l'étape de procédé a. se fait tout d'abord dans une première étape partielle avec une couche de colle et ensuite dans une seconde étape partielle, par l'application des particules solides sur la couche de colle.

10. Procédé selon l'une des revendications 8 ou 9,
**caractérisé en ce que**
le collage entre le matériau de remplissage et les particules solides se fait par une activation chimique ou physique après le durcissement du matériau de remplissage anorganique.

11. Procédé selon l'une des revendications 8 à 10,
**caractérisé en ce que**
la liaison par la forme entre le matériau de remplissage formé de composants organiques et/ou organiques et anorganiques ainsi que de la couche de colle anorganique se fait par activation chimique ou physique après durcissement du matériau de remplissage anorganique et/ou organique.

12. Procédé selon l'une des revendications 8 à 11,
**caractérisé en ce que**
seules les étapes de procédé a) et b) se font à un autre endroit que les étapes de procédé c)-e).

13. Procédé selon l'une des revendications 8 à 12,
**caractérisé en ce que**
avant le remplissage avec un moyen d'étanchéité (10) on ferme l'intervalle d'assemblage avec au moins une matière coulée et un volume montant pour avoir un volume d'intervalle d'assemblage fermé par ailleurs.
